# EUROPÄISCHE PATENTANMELDUNG

(11) **EP 2 098 395 A1**
(43) Veröffentlichungstag der Anmeldung: **09.09.2009**
(21) Anmeldenummer: 08004012.4
(22) Anmeldetag: 04.03.2008
(51) Int. Cl.: B60J 7/057

(54) **Baugruppe für ein Schiebedach**

(71) Anmelder: ArvinMeritor GmbH, 63128 Dietzenbach (DE)
(72) Erfinder: Röder, Joachim, 63165 Mühlheim (DE); Hogl, Zlatko, 64291 Darmstadt (DE); Vogel, Stefan, 63683 Ortenberg (DE)
(74) Vertreter: Prinz & Partner

(57) **Zusammenfassung**

Eine Baugruppe für ein Schiebedach enthält eine rechte und eine linke Führungsschiene (4), die einander gegenüberliegen, ein Bauteil (5), das sich zwischen den beiden Führungsschienen (4) erstreckt und in diesen geführt ist, und ein Kabel (22), von dem ein erster Abschnitt sich zwischen einer rechten Vorderseite des Bauteils und einer linken Hinterseite des Bauteils erstreckt und von dem sich ein zweiter Abschnitt zwischen einer linken Vorderseite und einer rechten Hinterseite erstreckt, wobei das Kabel (22) abschnittsweise in einem Bowdenmantel (16) geführt ist.

## Beschreibung

Die Erfindung betrifft eine Baugruppe für ein Schiebedach, insbesondere mit einem Bauteil, das In zwei einander gegenüberliegenden Führungsschienen verschiebbar geführt ist. Bei dem Bauteil kann es sich beispielsweise um ein Sonnenschutzrollo oder auch um einen Deckel handeln.

Bei einem solchem Bauteil stellt sich das Problem, daß es in den Führungsschienen nicht verkanten soll. Andernfalls könnte das Bauteil nicht leichtgängig in den Führungsschienen verschoben werden. Dieses Problem ist umso bedeutsamer, je kürzer das Bauteil, betrachtet in seiner Verschieberichtung, ausgeführt ist. Betrachtet man beispielsweise einen Spriegel, der idealisiert betrachtet punktförmig in jeder Führungsschiene gelagert ist, ist zu erkennen, daß diese Art der Führung keinerlei Schutz gegen ein Verkanten bietet.

Aus der DE 100 64 718 C1 ist bereits ein Sonnenschutzrollo mit einem Spriegel bekannt, an dem zwei Kabel angebracht sind. Diese werden über insgesamt sechs Umlenkrollen so geführt, daß ein Verkanten des Spriegels verhindert ist. Aufgrund der großen Anzahl von Umlenkrollen ist der Aufbau vergleichsweise aufwendig.

Die Aufgabe der Erfindung besteht darin, eine Baugruppe für ein Schiebedach bereitzustellen, bei dem ein Verkanten des in Führungsschienen geführten Bauteils zuverlässig verhindert ist.

Zur Lösung dieser Aufgabe ist erfindungsgemäß eine Baugruppe für ein Schiebedach vorgesehen, mit einer rechten und einer linken Führungsschiene, die einander gegenüberliegen, einem Bauteil, daß sich zwischen den beiden Führungsschienen erstreckt und in diesen geführt ist, und einem Kabel, von dem ein erster Abschnitt sich zwischen einer rechten Vorderseite des Bauteils und einer linken Hinterseite des Bauteils erstreckt und von dem sich ein zweiter Abschnitt zwischen einer linken Vorderseite und einer rechten Hinterseite erstreckt, wobei das Kabel abschnittsweise in einem Bowdenmantel geführt ist.

Durch die Verwendung von Bowdenmänteln zur Führung der Kabel ergibt sich ein besonders platzsparender Aufbau. Weiterhin sind die Kabel gut geschützt, so daß eine Verschmutzung verhindert ist.

Soweit in der Anmeldung Begriffe wie "vorne", "hinten", "rechts" und "links" verwendet werden, geschieht dies zum Zwecke eines guten Verständnisses. Diese Begriffe stellen auf die übliche Anordnung der Baugruppe am Dach eines Kraftfahrzeugs ab und auch auf die übliche Fahrtrichtung des Fahrzeugs. An der technischen Funktion ändert sich jedoch nichts, wenn die Baugruppe "seitenverkehrt" aufgebaut wird, so daß die Bauteile, die in der Anmeldung als "rechts" beschrieben werden, dann auf der linken Seite angeordnet sind.

Gemäß einer bevorzugten Ausführungsform der Erfindung ist vorgesehen, daß das Kabel einstückig ausgeführt ist. Dies verringert den Montageaufwand, da nur ein einziges, endlos ausgeführtes Kabel angebracht werden muß.

Vorzugsweise ist das Kabel mit dem zu verstellendem Bauteil an dessen rechten und dessen linken Ende verbunden, so daß Zugkräfte übertragen werden können. Insbesondere kann dabei vorgesehen sein, daß an dem Kabel Mitnehmer angebracht sind, die in das Bauteil eingehängt sind. Auf diese Weise können mit geringem Aufwand Kräfte auf das Bauteil übertragen werden, und umgekehrt.

Gemäß einer Ausführungsform der Erfindung ist vorgesehen, daß am vorderen Ende jeder Führungsschiene eine Umlenkrolle für das Kabel angebracht ist. Dies ermöglicht, das Kabel am vorderen Ende der Umlenkschiene auf sehr engem Raum umzulenken, ohne daß große Reibung erzeugt wird.

Vorzugsweise ist vorgesehen, daß sich ein erster Bowdenmantel von einem der rechten Umlenkrolle zugeordneten Widerlager nach hinten und dort zu einem Widerlager der linken Umlenkrolle an der linken Führungsschiene erstreckt und sich ein zweiter Bowdenmantel von einem der linken Umlenkrolle zugeordneten Widerlager nach hinten und dort zu einem Widerlager an der rechten Führungsschiene erstreckt. Bei dieser Ausführungsform wird vor den Führungsschienen kein Bauraum für das Kabel benötigt.

Gemäß einer alternativen Ausführungsform ist vorgesehen, daß sich ein erster Bowdenmantel von einem vorderen Widerlager an der rechten Führungsschiene zur linken Führungsschiene und dort nach hinten zu einem hinteren Widerlager erstreckt und sich ein zweiter Bowdenmantel von einem vorderen Widerlager an der linken Führungsschiene zur rechten Führungsschiene und dort nach hinten zu einem hinteren Widerlager erstreckt. Der Vorteil dieser Ausführungsform besteht darin, daß hinter den Führungsschienen kein Bauraum für das Kabel benötigt wird.

Vorzugsweise ist zwischen einem Widerlager und dem diesem zugeordnetem Ende des Bowdenmantels eine Druckfeder angeordnet. Mit der Druckfeder kann mit geringem Aufwand die nötige Vorspannung des Kabels erzeugt werden, so daß diese das Bauteil ohne Spiel zentriert.

Gemäß einer Ausführungsform der Erfindung ist eine Seilrolle vorgesehen, über die das Kabel läuft. Die Seilrolle kann an einer beliebigen Stelle angeordnet und dazu verwendet werden, einen Antriebsmotor an das Kabel anzukoppeln, so daß das Bauteil vom Antriebsmotor verstellt werden kann.

Das Bauteil kann ein Spriegel sein, der Teil eines Sonnenschutzrollos ist. Das Bauteil kann alternativ auch ein Deckel sein, der Teil eines Schiebedachsystems ist.

Die Erfindung wird nachfolgend anhand zweier Ausführungsformen beschrieben, die in den beigefügten Zeichnungen dargestellt sind. In diesen zeigen:
- Figur 1 schematisch ein Fahrzeugdach mit daran angebrachtem Schiebedach;
- Figur 2 schematisch in einer Draufsicht eine ersten Ausführungsform einer erfindungsgemäßen Baugruppe; und
- Figur 3 schematisch in einer Draufsicht eine zweite Ausführungsform einer erfindungsgemäßen Baugruppe.

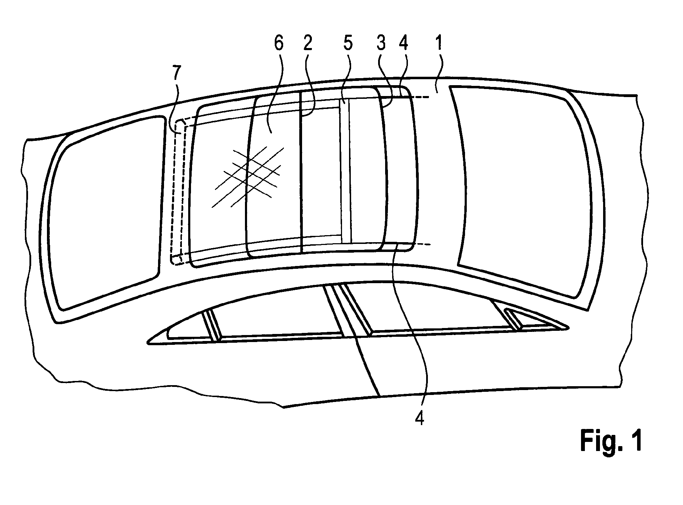

In Figur 1 ist schematisch ein Dach 1 eines Kraftfahrzeugs gezeigt, daß mit einem Schiebedach versehen ist. Das Schiebedach weist einen hinteren Deckel 2 und einen vorderen Deckel 3 auf, wobei der vordere Deckel in einer teilweise zurückgeschobenen Stellung gezeigt ist, in welcher er mit dem hinterem Deckel 2 überlappt. Der Deckel 3 dient dazu, eine Im Dach 1 ausgebildete Dachöffnung teilweise oder vollständig freizugeben. Das Sonnenschutzrollo kann unterhalb der Deckel zwischen einer zurückgeschobenen Position, in der sich der Spriegel hinten befindet, und einer vorgezogenen Position verstellt werden, in der sich der Spriegel vorne befindet und die Rollobahn 6 eine Verschattung des Innenraums bewirkt.

Am Dach 1 sind Führungsschienen 4 angebracht, an denen der Deckel 3 verschiebbar angebracht sein kann. In den Führungsschienen 4 ist ein Bauteil 5 verschiebbar geführt, das beim hier gezeigten Ausführungsbeispiel ein Spriegel eines Sonnenrollos ist. Das Sonnenrollo enthält eine Rollobahn 6, die sich zwischen dem in Fahrtrichtung gesehen vorne angeordnetem Spriegel 5 und einer hinten angeordneten Wickelwelle 7 erstreckt.

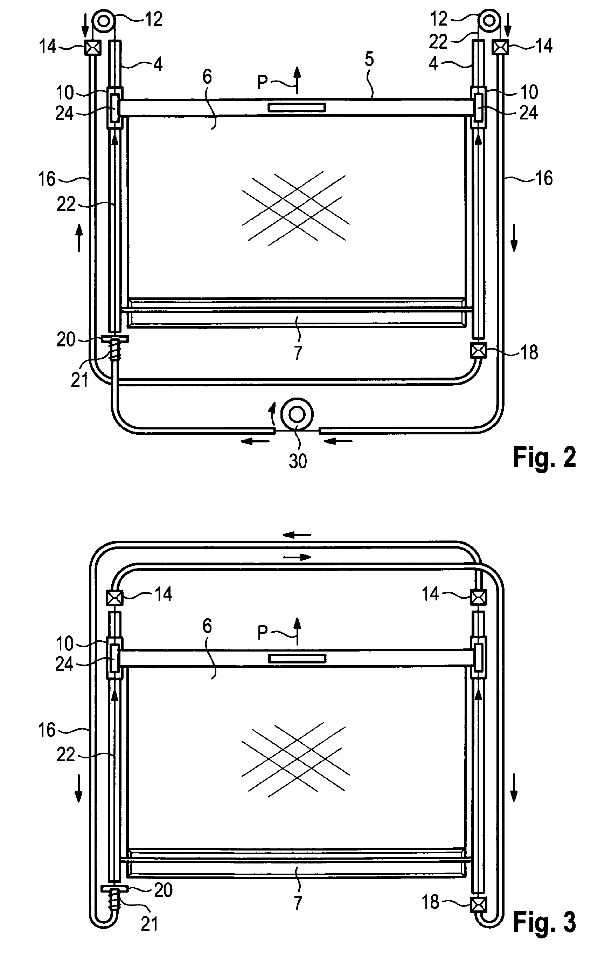

In Figur 2 ist das Sonnenschutzsystem im Detail gezeigt. Der Spriegel 5 als in den beiden Führungsschienen 4 gelagertes Bauteil ist an seinen außenliegenden Enden jeweils mit einem Gleiter 10 versehen, der in den Führungsschienen 4 verschiebbar geführt ist. Am vorderen Ende der Führungsschienen ist auf jeder Seite eine Umlenkrolle 12 angeordnet, der jeweils ein Widerlager 14 für einen Bowdenmantel 16 zugeordnet ist. Am hinteren Ende jeder Führungsschiene ist ebenfalls ein Widerlager für jeden Bowdenmantel angeordnet, wobei das am hinterem Ende der rechten Führungsschiene 4 angeordnete Widerlager mit dem Bezugszeichen 18 versehen ist und das an der linken Führungsschiene 4 zugeordnete Widerlager mit dem Bezugszeichen 20. Das Widerlager 20 ist mit einer Druckfeder 21 versehen, die den Bowdenmantel vom eigentlichen Widerlager wegzudrücken sucht.

Es ist ein Kabel 22 vorgesehen, das einstückig, also endlos ausgeführt ist. Der Verlauf des Kabels wird hier ausgehend vom rechtem Ende des Spriegels beschrieben. Das Kabel 22 ist mit zwei Mitnehmern oder Einhängeplomben 24 versehen, von denen eine in eine entsprechende Aufnahme des rechten Gleiters 10 des Spriegels 5 eingehängt ist. Von dort, also vom vorderen Rand des Spriegels, verläuft das Kabel nach vorne um die rechte Umlenkrolle 12 und durch das Widerlager 14, wo es in den dort abgestützten Bowdenmantel 16 eintritt. Das Kabel 22 verläuft dann weiter auf der rechten Seite nach hinten und wird hinter der rechten Führungsschiene 4 nach links umgelenkt, so daß es schließlich durch das linke Widerlager 20 verläuft, an dem der entsprechende Bowdenmantel endet. Vom Widerlager 20 verläuft das Kabel 22 nach vorne, wo sein zweiter Mitnehmer 24 in den rechten Gleiter 10 des Spriegels 5 eingehängt ist. Von dort verläuft das Kabel 22 nach vorne um die linke Umlenkrolle 12 durch das Widerlager 14 hindurch, wo es in den zweiten Bowdenmantel 16 eintritt. In diesem verläuft es entlang der linken Führungsschiene 4 nach hinten und wird dort am Ende der Führungsschiene umgelenkt, so daß es zum Widerlager 18 an der rechten Führungsschiene 4 gelangt. Dort tritt es aus dem Bowdenmantel aus und verläuft nach vorne zum Gleiter 10 am rechtem Ende des Spriegels 5 auf dessen Hinterseite. Aufgrund des Verlaufs des Kabels 22 verhindert das Kabel, daß sich der Spriegel 5 zwischen den Führungsschienen 4 verkantet. Dies beruht darauf, daß eine Verlagerung des Kabels am rechten Ende des Spriegels 5 zu deselben Verlagerung am linken Ende des Spriegels führt. Dies kann einfach nachvollzogen werden anhand einer angenommenen Verschiebung des Spriegels 5 in den Führungsschienen 4 nach vorne, wie sie durch den Pfeil P angedeutet ist. Dabei wird das Kabel sowohl auf der rechten als auch auf der linken Seite des Spriegels mitgenommen, wie die dem Kabel zugeordneten Pfeile zeigen.

Die am Widerlager 20 angeordnete Druckfeder 21 spannt das gesamte System aus Kabel und Bowdonmänteln vor, so daß kein Spiel vorhanden ist. Die Bowdenmäntel 16 gewährleisten eine reibungsarme und vor Verschmutzung gesicherte Führung für die Kabel.

Es ist eine Seilrolle 30 gezeigt, die dazu verwendet werden kann, einen Antriebsmotor mit dem System zu koppeln. Zu diesem Zweck wird die Seilrolle vom Kabel 22 in mehreren Umdrehungen umschlungen, so daß aufgrund der entstehenden Seilreibung eine Antriebskraft in das Kabel 22 eingeleitet werden kann. Die Seilrolle 30 kann an jeder beliebigen Stelle des Kabels angeordnet werden, so daß der Antriebsmotor letztlich an einer im Hinblick auf dem zur Verfügung stehendem Raum optimal angeordnet werden kann.

In Figur 3 ist eine alternative Ausgestaltung gezeigt. Für die von der Ausführungsform von Figur 2 bekannten Bauteile werden dieselben Bezugszeichen verwendet. Der wesentliche Unterschied zur Ausführungsform von Figur 2 besteht darin, daß das Kabel von der rechten auf die linke Seite und von der linken auf die rechte Seite nicht hinter der Wickelwelle 7 geführt werden, sondern im vorderem Bereich des Systems. Dies ermöglicht, einen Antriebsmotor beispielsweise im vorderem Bereich des Sonnenschutzsystems anzuordnen.

Bei der gezeigten Ausführungsform werden keine Umlenkrollen verwendet. Abweichend können jedoch im Bereich der Umlenkung am hinterem Ende der Führungsschienen, wo das Kabel um 180° umgelenkt wird, Umlenkrollen verwendet werden, ähnlich denen, die bei der Ausführungsform gemäß Figur 2 am vorderen Ende der Führungsschienen angeordnet sind. Bei den beschriebenen Ausführungsformen wird als in den Führungsschienen verstellbares Bauteil ein Spriegel verwendet. Erfindungsgemäß kann jedoch auch vorgesehen sein, daß das Bauteil ein Deckel eines Schiebedachsystems ist, bei dem mittels des Kabels gewährleistet wird, daß er sich beim Verschieben in den Führungsschienen nicht verkantet.

## Patentansprüche

1. Baugruppe für ein Schiebedach, mit einer rechten und einer linken Führungsschiene (4), die einander gegenüberliegen, einem Bauteil (5), das sich zwischen den beiden Führungsschienen (4) erstreckt und in diesen geführt ist, und einem Kabel (22), von dem ein erster Abschnitt sich zwischen einer rechten Vorderseite des Bauteils und einer linken Hinterseite des Bauteils erstreckt und von dem sich ein zweiter Abschnitt zwischen einer linken Vorderseite und einer rechten Hinterseite erstreckt, wobei das Kabel (22) abschnittsweise in einem Bowdenmantel (16) geführt ist.

2. Baugruppe nach Anspruch 1, **dadurch gekennzeichnet, daß** das Kabel (22) einstückig ausgeführt ist.

3. Baugruppe nach Anspruch 1 oder Anspruch 2, **dadurch gekennzeichnet, daß** das Kabel (22) mit dem Bauteil an dessen rechten und dessen linken Ende verbunden ist, so daß Zugkräfte übertragen werden können.

4. Baugruppe nach Anspruch 3, **dadurch gekennzeichnet, daß** an dem Kabel Mitnehmer (24) angebracht sind, die in das Bauteil eingehängt sind.

5. Baugruppe nach einem der vorhergehenden Ansprüche, **dadurch gekennzeichnet, daß** am vorderen Ende jeder Führungsschiene (4) eine Umlenkrolle (12) für das Kabel (22) angebracht ist.

6. Baugruppe nach Anspruch 5, **dadurch gekennzeichnet, daß** sich ein erster Bowdenmantel (16) von einem der rechten Umlenkrolle (12) zugeordneten Widerlager (14) nach hinten und dort zu einem Widerlager (20) an der linken Führungsschiene (4) erstreckt und sich ein zweiter Bowdenmantel (16) von einem der linken Umlenkrolle (12) zugeordneten Widerlager (14) nach hinten und dort zu einem Widerlager (18) an der rechten Führungsschiene (4) erstreckt.

7. Baugruppe nach einem der Ansprüche 1 bis 4, **dadurch gekennzeichnet, daß** sich ein erster Bowdenmantel (16) von einem vorderen Widerlager (14) an der rechten Führungsschiene (4) zur linken Führungsschiene (4) und dort nach hinten zu einem hinteren Widerlager (20) erstreckt und sich ein zweiter Bowdenmantel (16) von einem vorderen Widerlager (14) an der linken Führungsschiene (4) zur rechten Führungsschiene (4) und dort nach hinten zu einem hinteren Widerlager (18) erstreckt.

8. Baugruppe nach einem der Ansprüche 5 und 6, **dadurch gekennzeichnet, daß** zwischen einem Widerlager (20) und dem diesem zugeordneten Ende des Bowdenmantels (16) eine Druckfeder angeordnet ist.

9. Baugruppe nach einem der vorhergehenden Ansprüche, **dadurch gekennzeichnet, daß** eine Seilrolle (30) vorgesehen ist, über die das Kabel läuft.

10. Baugruppe nach Anspruch 9, **dadurch gekennzeichnet, daß** mit der Seilrolle (30) ein Antriebsmotor gekoppelt ist.

11. Baugruppe nach einem der vorhergehenden Ansprüche, **dadurch gekennzeichnet, daß** das Bauteil ein Spriegel (5) ist, der Teil eines Sonnenschutzrollos ist.

12. Baugruppe nach einem der Ansprüche 1 bis 10, **dadurch gekennzeichnet, daß** das Bauteil ein Deckel ist, der Teil eines Schiebedachsystems ist.
